# EUROPÄISCHE PATENTSCHRIFT

(11) **EP 1 215 066 B1**
(45) Veröffentlichungstag und Bekanntmachung des Hinweises auf die Patenterteilung: **25.04.2007**
(21) Anmeldenummer: 01129267.9
(22) Anmeldetag: 12.12.2001
(51) Int. Cl.: B60J 7/04, B60J 7/16, B60J 7/00, B60J 7/047

(54) **Fahrzeugdach mit einer Dachöffnung und zumindest einem bewegbaren Deckel**
Vehicle roof with at least one roof opening and at least one movable panel
Toit de véhicule avec au moins une ouverture de toit et au moins un panneau amovible

(30) Priorität: 13.12.2000 DE 10061981
(43) Veröffentlichungstag der Anmeldung: 19.06.2002
(73) Patentinhaber: Webasto Vehicle Systems International GmbH, 82131 Stockdorf (DE)
(72) Erfinder: de Gaillard, Francois, 85390 Mouilleron en pareds (FR)
(74) Vertreter: Konnerth, Dieter Hans

(56) Entgegenhaltungen:
- EP-B- 0 509 439
- DE-C- 441 648
- FR-A- 1 339 584
- US-A- 3 036 860

## Beschreibung

Die Erfindung betrifft ein Fahrzeugdach mit einer Dachöffnung und einer Deckelanordnung mit zumindest einem bewegbaren transparenten Deckel zum wahlweisen Schließen oder zumindest teilweisen Freigeben der Dachöffnung.

Aus der DE 199 14 427 A1 ist ein Fahrzeugdach bekannt, das einen festen Dachabschnitt und wenigstens zwei nebeneinander angeordnete und in Fahrzeugquerrichtung unter die seitlichen festen Dachabschnitte verschiebbar angeordnete Dachteile aufweist. Sowohl die verschiebbaren Dachteile wie auch die festen Dachabschnitte sind zumindest teilweise lichtdurchlässig. Die freilegbare Dachöffnung nimmt einen überwiegenden Anteil der Dachfläche in Querrichtung ein. Zusammen mit den seitlichen Dachabschnitten ist ein sehr breiter lichtdurchlässiger Bereich gebildet. Der großflächige Lichteinfall kann, insbesondere bei direkter Sonneneinstrahlung, von den Fahrzeuginsassen auch als negativ empfunden werden, so daß vergleichsweise große Abschattungseinrichtungen erforderlich sind. Sind die lichtdurchlässigen Teile des Fahrzeugdachs aus Glasteilen gebildet, so weist das Fahrzeugdach demzufolge ein hohes Gewicht auf.

Aus der EP 509 439 B ist ein gattungsgemäßes Fahrzeugdach bekannt.

Aufgabe der Erfindung ist es, ein eingangs genanntes Fahrzeugdach mit einer durch einen Deckel verschließbaren Dachöffnung zu schaffen, das bei einfachem Aufbau eine zweckmäßige Innenraumausleuchtung bei individuell wählbarer Belüftung gestattet.

Diese Aufgabe wird durch das Fahrzeugdach von Anspruch 1 erfindungsgemäß gelöst. Die Dachöffnung erstreckt sich mittig am Fahrzeugdach zwischen zwei seitlichen lichtundurchlässigen Randabschnitten des Fahrzeugdaches in Längsrichtung und der zumindest eine Deckel ist mittels einer Führungseinrichtung derart gelagert, daß er in eine Lüftungsstellung bewegbar ist. Ein derart gebildetes Fahrzeugdach bietet einen großzügig bemessenen Lichteinfall über einen mittigen länglichen Bereich in den Innenraum, wobei dieser Lichteinfall im wesentlichen zwischen Fahrer und Beifahrer erfolgt, die ihrerseits unter den lichtundurchlässigen Randabschnitten des Fahrzeugdaches weitgehend gegen direkte blendende Sonneneinstrahlung geschützt sind. Dementsprechend ist der wesentliche Lichteinfall bei einem vier- oder fünfsitzigen Personenkraftwagen auf einen Bereich zwischen zwei im Fond sitzenden Insassen begrenzt, die durch den länglichen mittigen Deckel, wenn dieser durchsichtig gebildet ist, jedoch eine wesentlich verbesserte freie Sicht nach oben erhalten. Eine Lagereinrichtung, die den oder die Deckel lediglich in zumindest eine Lüftungsstellung bewegt, ist mit vergleichsweise geringem Aufwand herstellbar.

Erfindungsgemäß weist der jeweilige seitliche lichtundurchlässige Randabschnitt des Fahrzeugdaches zumindest die Breite der Dachöffnung auf. So kann die Breite der Dachöffnung in etwa ein Drittel der Breite des Fahrzeugdaches betragen. Hierbei ergibt sich ein guter Kompromiß zwischen der Größe des Lichteintrittsbereiches und der aus Komfortgründen abgeschatteten seitlichen Bereiche. Die Länge der Dachöffnung beträgt zweckmäßigerweise zumindest das Zweifache und insbesondere das Drei- bis Vierfache ihrer Breite.

Vorteilhafte Ausgestaltungen der Erfindung sind in den Unteransprüchen angegeben.

Wenn der zumindest eine Deckel zumindest in eine Teilöffnungsstellung verschiebbar ist, bietet das Fahrzeugdach einen verbesserten Nutzwert, da zum Belüften ein größerer Bereich der Dachöffnung freilegbar ist.

Während eine einfache Gestaltung des Fahrzeugdaches lediglich einen einzigen Deckel für die Dachöffnung vorsieht, kann die Deckelanordnung auch einen vorderen Deckel und einen hinteren Deckel aufweisen. Für eine längere Dachöffnung kann die Deckelanordnung auch mehr als zwei Deckel aufweisen.

Vorzugsweise ist der Deckel bzw. sind die Deckel aus der Dachöffnung in Querrichtung bezüglich des Fahrzeugdaches unter einen der beiden lichtundurchlässigen Randabschnitte des Fahrzeugdaches verschiebbar. Dadurch können auch längere Deckel unter das Fahrzeugdach in eine Offenstellung verschoben werden.

Bei einer Deckelanordnung mit zwei Deckeln kann vorgesehen sein, daß einer der beiden Deckel unter den anderen Deckel oder daß jeder Deckel unter den jeweils anderen Deckel verschiebbar ist.

Zweckmäßigerweise ist der Deckel bzw. sind die Deckel in zumindest eine Lüftungsstellung absenkbar, wodurch das Strömungsprofil am Fahrzeugdach weniger verändert wird wie bei einem spoilerartig ausgestellten Deckel.

Die Lagereinrichtung kann derart gestaltet sein, daß sie den Deckel im Bereich seines Vorderrandes und im Bereich seines Hinterrandes lagert. Bei zwei Dekkeln kann eine Lagereinrichtung verwendet werden, wie sie z. B. in der EP 0 306 647 A2 beschrieben ist.

Der Deckel kann zum Einstellen von Lüftungsstellungen von der Lagereinrichtung an seinem Vorderrand, an seinem Hinterrand oder an seinem Vorderrand und an seinem Hinterrand abgesenkt werden, so daß unterschiedliche Belüftungswirkungen für die vorderen und die hinteren Insassen erzielbar sind.

Zum Regulieren des einfallenden Lichtes kann eine in Querrichtung bewegbare Sonnenschutzeinrichtung zum zumindest teilweisen Abdecken der Dachöffnung vorgesehen sein. Dafür eignen sich verschiebbare plattenförmige Sonnenschutzteile oder Himmelteile oder auch ausziehbare Rollos. Eine einfache Gestaltung sieht vor, daß die Sonnenschutzeinrichtung zumindest ein flächiges verschiebbares Sonnenschutzteil enthält, das an der Lagereinrichtung verschiebbar gelagert ist und in Außergebrauchstellung unter dem lichtundurchlässigen Randabschnitt des Fahrzeugdaches angeordnet ist.

Zweckmäßigerweise sind der oder die Deckel und die Sonnenschutzeinrichtung an einer Baueinheit gelagert und vormontiert. Diese Baueinheit wird bei der Montage von unten an des Fahrzeugdach eingesetzt und daran befestigt.

Nachfolgend werden Ausführungsbeispiele des Fahrzeugdachs unter Bezugnahme auf die Zeichnungen näher erläutert. Es zeigt:
- Fig. 1: in den perspektivischen Draufsichten 1.a bis 1.e ein Personen-Kraftfahrzeug mit einem erfindungsgemäßen Fahrzeugdach und mit einem bewegbaren Deckel für die Dachöffnung in unterschiedlichen Stellungen;
- Fig. 2: in einer perspektivischen Draufsicht eine den Deckel enthaltende Baueinheit mit einer Lagereinrichtung für den Deckel und einer Abschattungseinrichtung;
- Fig. 3: in einem Längsschnitt gemäß der Schnittlinie A - A in Fig. 2 das Fahrzeugdach und den Deckel;
- Fig. 4: in einer Explosionsdarstellung die Baueinheit mit dem Deckel;
- Fig. 5: in einer Querschnittansicht das Fahrzeugdach mit geschlossenem Dekkel;
- Fig. 6: in einer Querschnittansicht das Fahrzeugdach mit geöffnetem Deckel;
- Fig. 7: in einer perspektivischen Ansicht den Fahrzeuginnenraum und die Unterseite des Fahrzeugdaches;
- Fig. 8: in einer perspektivischen Draufsicht ein Fahrzeug mit einem Fahrzeugdach mit zwei hintereinander angeordneten Deckeln;
- Fig. 9: in den perspektivischen Draufsichten 9.a bis 9.c das in Fig. 8 dargestellte Fahrzeug mit unterschiedlichen Stellungen der beiden Deckel; und
- Fig. 10: in den perspektivischen Draufsichten 10.a bis 10.c das in Fig. 8 dargestellte Fahrzeug mit unterschiedlichen Stellungen der beiden Deckel.

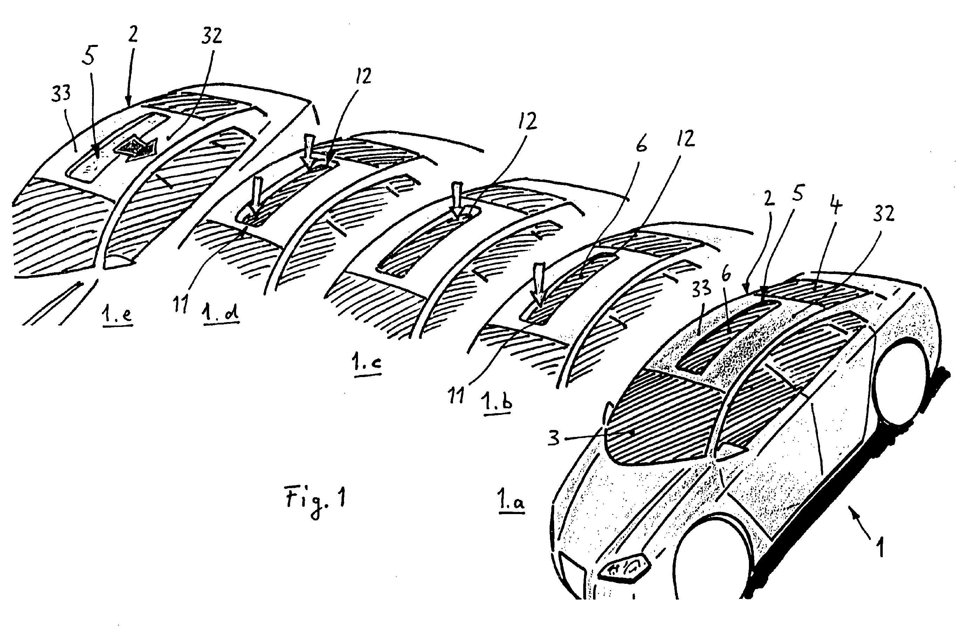

Ein Fahrzeug 1, beispielsweise ein viertüriger Personenkraftwagen oder Limousine (siehe Fig. 1), enthält ein festes Fahrzeugdach 2, das sich zwischen einer Windschutzscheibe 3 und einer Heckscheibe 4 erstreckt. In dem Fahrzeugdach 2 ist eine Dachöffnung 5 gebildet, die mittels eines bewegbaren Deckels 6, der aus transparentem Material hergestellt ist und insbesondere ein Glasdeckel ist, verschließbar ist. Die Dachöffnung 5 hat eine längliche schmale Form und erstreckt sich in der Mitte des Fahrzeugdaches 2 in Längsrichtung. Die Breite der Dachöffnung 5 beträgt beispielsweise etwa 25 bis 30% der Breite des Fahrzeugdaches 2. Die Länge der Dachöffnung 5 beträgt beispielsweise etwa das Zwei- bis Fünffache ihrer Breite und kann bedarfsweise in Abhängigkeit von der Größe bzw. der Länge des Fahrzeugdaches gewählt werden. Der Deckel 6 weist folglich Abmessungen auf, die denjenigen der Dachöffnung 5 entsprechen.

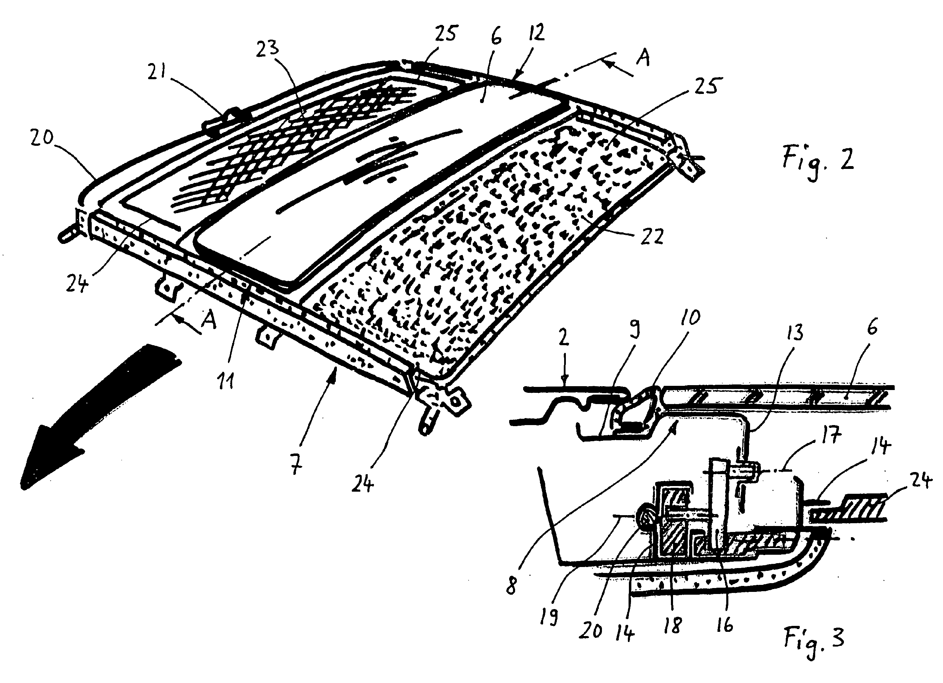

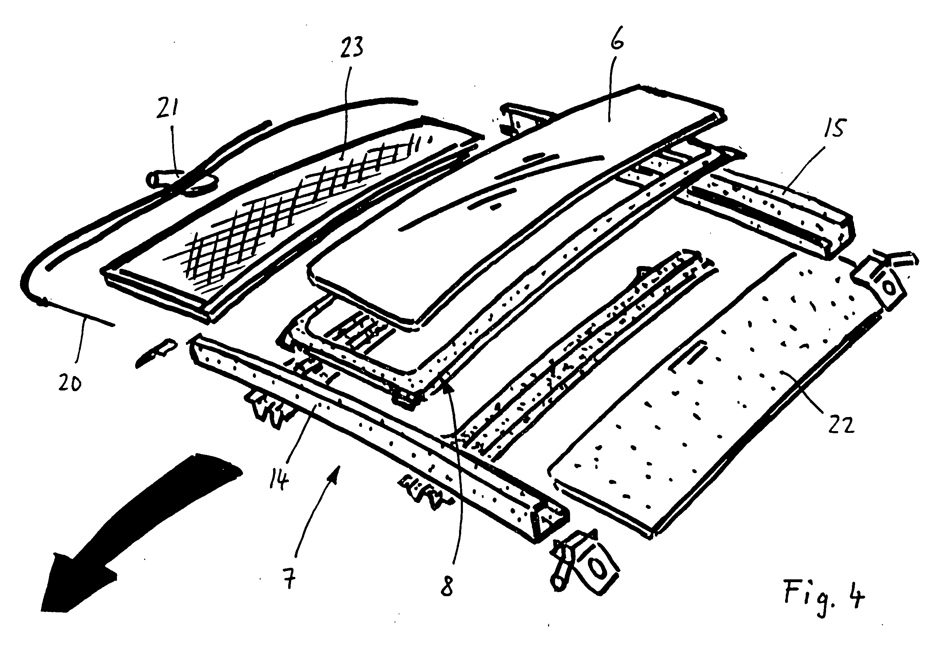

Der Deckel 6, der an einer unter dem festen Fahrzeugdach 2 angebrachten Baueinheit 7 (siehe Fig. 2 bis 4) gelagert ist, enthält einen umlaufenden Rahmen 8, der eine Wasserrinne 9 bildet und eine Deckeldichtung 10 trägt. Der Rahmen 8 enthält im Bereich des Vorderrandes 11 wie auch des Hinterrandes 12 des Dekkels 6 jeweils ein abwärts abstehendes Rahmenteil 13. Das vordere bzw. das hintere Rahmenteil 13 ist mittels einer jeweiligen Lagereinrichtung mit einer vorderen Führungsschiene 14 bzw. einer hinteren Führungsschiene 15 der Lagereinrichtung für den Deckel 6 bewegbar gekoppelt. Die Lagereinrichtung enthält beispielsweise einen Ausstellhebel 16, der einerseits an dem Rahmenteil 13 um eine Schwenkachse 17 und andererseits an einem Schlitten 18 um eine Schwenkachse 19 schwenkbar gelagert ist. Der Schlitten 18 ist an der Führungsschiene 14 bzw. 15 verschiebbar gelagert und mit einem Antriebskabel 20 verbunden, das von einem Antriebsmotor 21 antreibbar ist.

Durch eine nicht näher dargestellte Steuereinrichtung ist der Ausstellhebel 16 um seine am Schlitten 18 gelagerte untere Schwenkachse 19 derart schwenkbar, daß er das Rahmenteil 13 und damit den Deckel 6 aus seiner in Fig. 1a dargestellten Schließstellung, in der er bündig in der Dachöffnung 5 angeordnet ist, abgesenkt.

An dem Vorderrand 11 und an dem Hinterrand 12 des Deckels 6 sind beispielsweise jeweils zwei voneinander beabstandete Lagereinrichtungen angeordnet, so daß unterschiedliche Lüftungs- und Öffnungsstellungen des Deckels 6 einstellbar sind. Werden lediglich die Schwenkhebel 16 der beiden vorderen Lagereinrichtungen abwärts verschwenkt, so wird der Vorderrand 11 des Deckels 6 in eine Lüftungsstellung abgesenkt (siehe Fig. 1.b), während der Hinterrand 12 des Dekkels 6 noch in seiner oberen Schließstellung bleibt. Entsprechend wird beim Absenken der Schwenkhebel 16 der beiden hinteren Lagereinrichtungen der Hinterrand 12 des Deckels 6 abgesenkt, während der Vorderrand 11 des Deckels 6 in seiner zur Oberfläche des Fahrzeugdaches 2 bündigen Schließstellung verbleibt (siehe Fig. 1.c). Auf diese Weise sind eine vordere bzw. eine hintere Lüftungsstellung des Deckels 6 einstellbar.

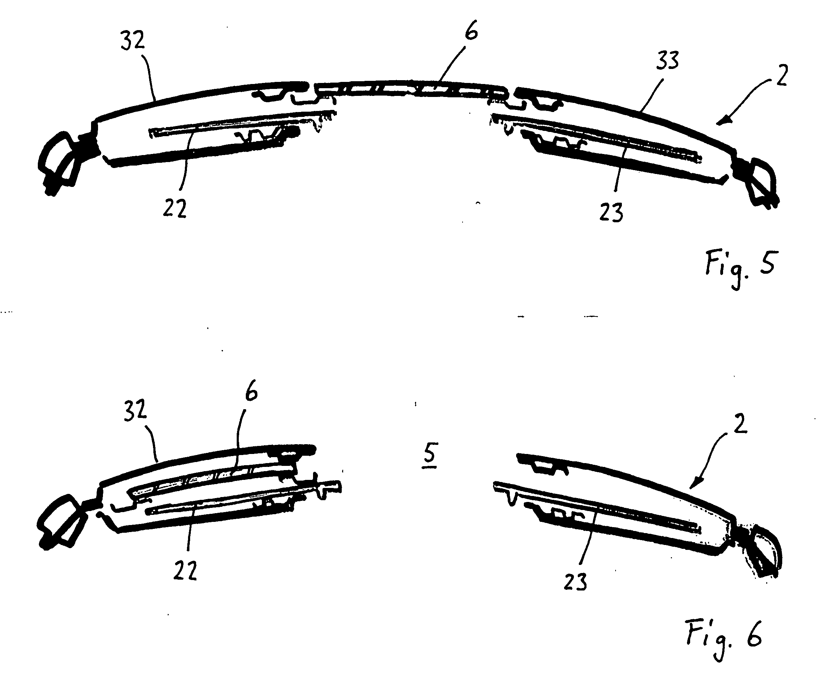

Werden die Schwenkhebel 16 sowohl der beiden vorderen wie auch der beiden hinteren Lagereinrichtungen abwärts verschwenkt, so ist der Deckel 6 in eine Lüftungsstellung abgesenkt, in der er an seinem gesamten Umfang gegenüber dem Rand der Dachöffnung 5 parallel zur Dachfläche abgesenkt ist (siehe Fig. 1.d), so daß ein umlaufender Lüftungsspalt gebildet ist. Aus dieser abgesenkten Lüftungsstellung kann der Deckel 6 mittels der Antriebskabel 20 und des Antriebsmotors 21 durch eine Querverschiebung seitlich unter einen der seitlichen Randabschnitte 32 und 33 des festen Fahrzeugdachs 2 in eine Offenstellung verschoben werden (siehe Fig. 1.e und Fig. 6).

Die beschriebenen Lagereinrichtungen sind nur beispielhaft, es können auch andere Einrichtungen zum Bewegen des Deckels vorgesehen sein. So kann am Vorderrand wie auch am Hinterrand des Deckels 6 jeweils nur eine Lagereinrichtung angeordnet sein.

An der Baueinheit 7 ist eine Abschattungseinrichtung angeordnet, die beispielsweise ein festes, im wesentlichen lichtundurchlässiges Sonnenschutzteil 22 und ein teilweise lichtdurchlässiges Sonnenschutzteil 23, das beispielsweise eine Netzstruktur aufweist, enthält. Die beiden Sonnenschutzteile 22 und 23, die als flache plattenförmige Teile gebildet sind, haben annähernd die Größe des Dekkels 6 und sind jeweils an ihrem Vorderrand 24 und an ihrem Hinterrand 25 an der vorderen bzw. der hinteren Führungsschiene 14 bzw. 15 verschiebbar gelagert, wobei sie in ihrer Außergebrauchstellung jeweils rechts bzw. links des Dekkels 6 unter dem festen Fahrzeugdach 2 bzw. den Randabschnitten 32 bzw. 33 angeordnet sind und bedarfsweise in Querrichtung unter den Deckel 6 bzw. die Dachöffnung 5 verschiebbar sind. Die beiden Sonnenschutzteile 22, 23 können in ihrer Außergebrauchstellung auch gemeinsam auf einer Seite neben der Dachöffnung 5 übereinander angeordnet sein.

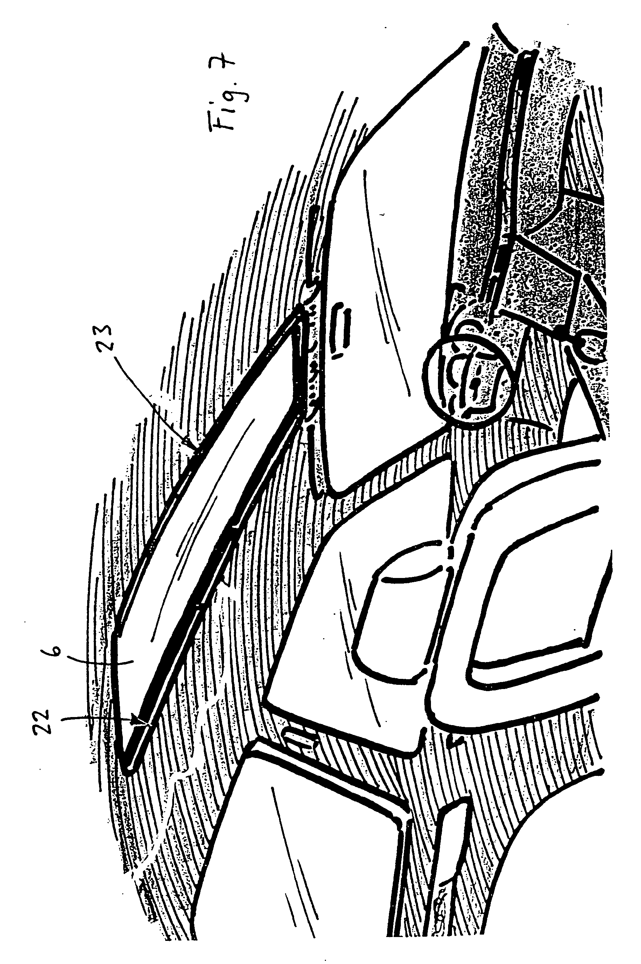

Die lange schmale Form der Dachöffnung 5 und des Deckels 6 gestattet einen freien Lichteinfall im wesentlichen in der Fahrzeugmitte zwischen Fahrer und Beifahrer (siehe Fig. 7) sowie zwischen den beiden Rücksitzen über einen langen Abschnitt des Fahrzeugdaches 2 im Gegensatz zu einem herkömmlichen Deckel mit einer Deckelbreite, die wesentlich größer ist wie die Deckellänge, so daß eine insbesondere auch für die Insassen auf den Rücksitzen angenehme Ausleuchtung des Fahrzeuginnenraumes entsteht. Gleichzeitig wird jedoch der unmittelbare Kopfraum des Fahrers und des Beifahrers bzw. der beiden Insassen auf den Rücksitzen durch die schmale Ausführung der Dachöffnung 5 bzw. des Deckels 6 abgeschattet, so daß direkte Sonneneinstrahlung, die die Insassen blenden könnte und von diesen daher als unangenehm empfunden werden könnte, weitgehend vermieden wird. Bedarfsweise kann durch die Abschattungseinrichtung bzw. das zumindest eine Sonnenschutzteil 22, 23 der Lichteinfall reguliert werden.

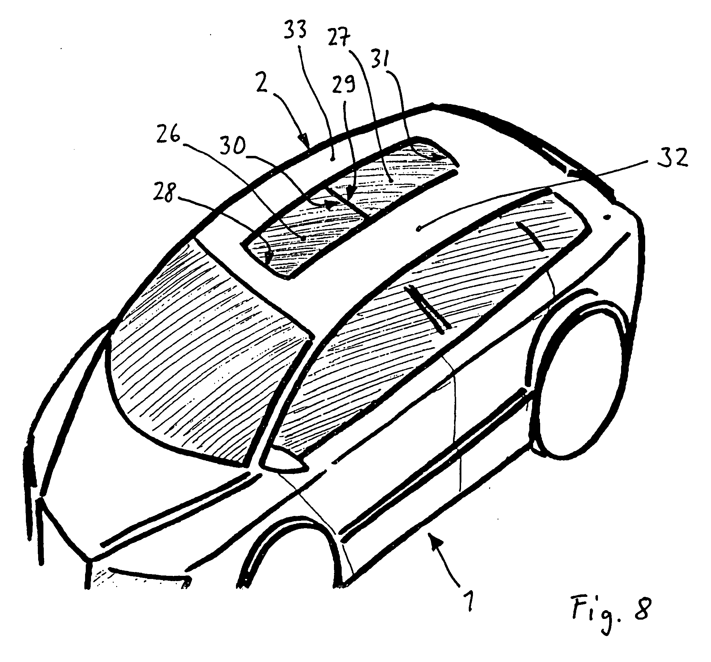

Ein weiteres Ausführungsbeispiel eines erfindungsgemäßen Fahrzeugdaches (siehe Fig. 8 bis 10) enthält eine Deckelanordnung mit zwei in der Dachöffnung 5 hintereinander anordenbaren Deckeln 26 und 27. Der vordere Deckel 26 und der hintere Deckel 27 sind derart gelagert, daß sie aus ihrer Schließstellung (siehe Fig. 8) an ihrem jeweiligen Vorderrand 28 bzw. 29 in eine Lüftungsstellung abgesenkt werden können, wobei der vordere und der hintere Deckel 26 bzw. 27 wahlweise einzeln unabhängig voneinander oder auch gemeinsam absenkbar sind. Die Lagereinrichtung für die beiden Deckel 26, 27, die prinzipiell entsprechend der eingangs beschriebenen Lagereinrichtung aufgebaut sein kann, kann auch derart gebildet sein, daß alternativ oder zusätzlich die beiden Deckel 26, 27 an ihren Hinterkanten 30 bzw. 31 absenkbar sind. Die beiden Deckel 26, 27 können gleiche oder unterschiedliche Längen aufweisen.

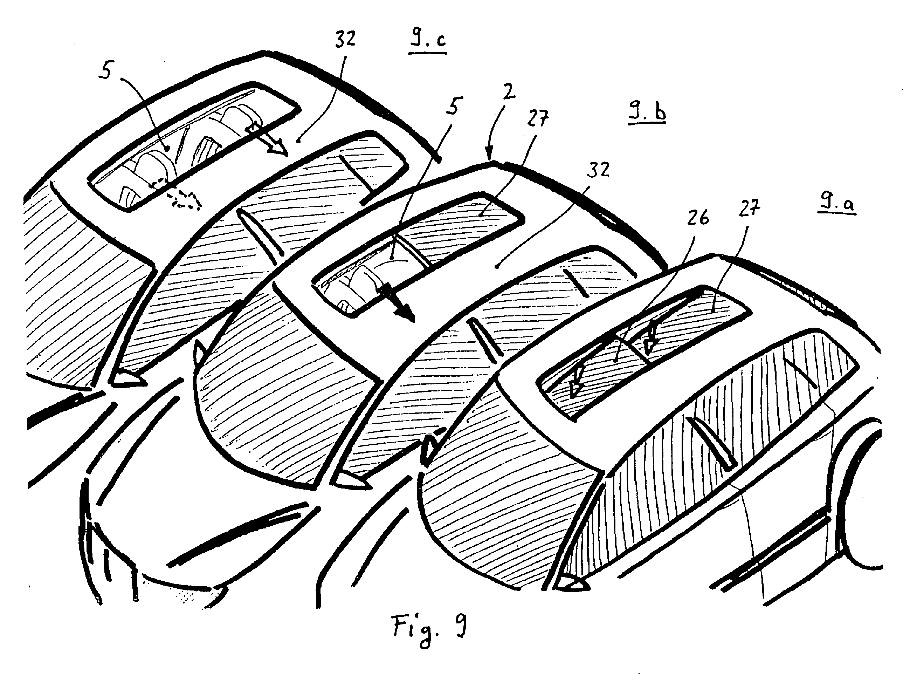

Zum Freigeben der Dachöffnung 5 kann der vordere Deckel 26 und/oder der hintere Deckel 27 entsprechend dem ersten Ausführungsbeispiel seitlich unter den Randabschnitt 32 des festen Fahrzeugdaches 2 verschoben werden. Fig. 9.b zeigt die teilweise geöffnete Dachöffnung 5, die in ihrem hinteren Abschnitt von dem hinteren Deckel 27 abgedeckt oder verschlossen ist und in ihrem vorderen Abschnitt von dem seitlich verschobenen vorderen Deckel 26 freigegeben ist. Durch zusätzliches Verschieben des hinteren Deckels 27 wird die Dachöffnung 5 vollständig freigelegt (siehe Fig. 9.c).

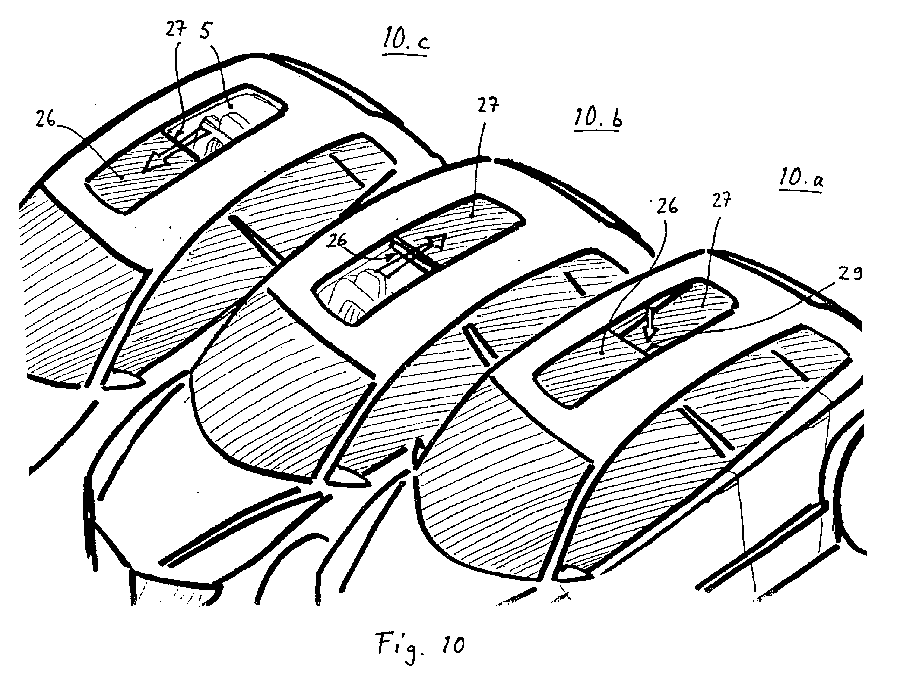

Eine Variante des Ausführungsbeispiels mit zwei Deckeln 26, 27 (siehe Fig. 10) enthält eine Lagereinrichtung, mittels der zum Öffnen eines Abschnittes der Dachöffnung 5 zumindest einer der Deckel unter den anderen Deckel oder jeder Deckel 26, 27 unter den jeweils anderen Deckel verschiebbar ist (siehe Fig. 10.b und 10.c). Fig. 10.a zeigt eine Lüftungsstellung, in der der hintere Deckel 27 an seinem Vorderrand 29 abgesenkt ist.

Das Fahrzeugdach 2 kann vor oder auch hinter der länglichen Dachöffnung 5 zusätzlich eine weitere Dachöffnung enthalten, die von einem festen Glasdeckel oder einem bewegbaren Deckel verschließbar ist und wahlweise zumindest teilweise freigegeben werden kann. Diese Dachöffnung erstreckt sich beispielsweise quer über das Fahrzeugdach.

### Bezugszeichenliste

- 1: Fahrzeug
- 2: Fahrzeugdach
- 3: Windschutzscheibe
- 4: Heckscheibe
- 5: Dachöffnung
- 6: Deckel
- 7: Baueinheit
- 8: Rahmen
- 9: Wasserrinne
- 10: Deckeldichtung
- 11: Vorderrand
- 12: Hinterrand
- 13: Rahmenteil
- 14: Führungsschiene
- 15: Führungsschiene
- 16: Ausstellhebel
- 17: Schwenkachse
- 18: Schlitten
- 19: Schwenkachse
- 20: Antriebskabel
- 21: Antriebsmotor
- 22: Sonnenschutzteil
- 23: Sonnenschutzteil
- 24: Vorderrand
- 25: Hinterrand
- 26: vorderer Deckel
- 27: hinterer Deckel
- 28: Vorderrand
- 29: Vorderand
- 30: Hinterrand
- 31: Hinterrand
- 32: Randabschnitt
- 33: Randabschnitt

## Patentansprüche

1. Fahrzeugdach mit einer Dachöffnung (5) und einer Deckelanordnung mit einem bewegbaren transparenten Deckel (6) zum wahlweisen Schließen oder zumindest teilweisen Freigeben der sich mittig am Fahrzeugdach (2) zwischen zwei seitlichen lichtundurchlässigen Randabschnitten (32, 33) des Fahrzeugdaches (2) in Längsrichtung erstreckenden Dachöffnung (5),
wobei der Deckel (6) mittels einer Lagereinrichtung derart gelagert ist, daß er in eine Lüfturigsstellung bewegbar ist,
**dadurch gekennzeichnet,**
**daß** der jeweilige seitliche Randabschnitt (32, 33) des Fahrzeugdaches (2) zumindest die Breite der Dachöffnung (5) aufweist.

2. Fahrzeugdach nach Anspruch 1,
**dadurch gekennzeichnet, daß** die Deckelanordnung zumindest zwei Deckel und insbesondere einen vorderen Deckel (26) und einen hinteren Deckel (27) aufweist.

3. Fahrzeugdach nach Anspruch 1 oder 2,
**dadurch gekennzeichnet, daß** der zumindest eine Deckel (6; 26, 27) zumindest in eine Teilöffnungsstellung verschiebbar ist.

4. Fahrzeugdach nach einem der Ansprüche 1 bis 3,
**dadurch gekennzeichnet, daß** der Deckel (6) bzw. die Deckel (26, 27) aus der Dachöffnung (5) in Querrichtung bezüglich des Fahrzeugdaches (2) unter einen der beiden lichtundurchlässigen Randabschnitte (32, 33) des Fahrzeugdaches (2) verschiebbar ist bzw. sind.

5. Fahrzeugdach nach Anspruch 2 oder 3,
**dadurch gekennzeichnet, daß** einer der beiden Deckel (26 oder 27) unter den anderen Deckel oder daß jeder Deckel (26, 27) unter den jeweils anderen Deckel verschiebbar ist.

6. Fahrzeugdach nach einem der Ansprüche 1 bis 5,
**dadurch gekennzeichnet, daß** die Länge der Dachöffnung (5) zumindest das Zweifache und insbesondere das Drei- bis Vierfache ihrer Breite beträgt.

7. Fahrzeugdach nach einem der Ansprüche 1 bis 6,
**dadurch gekennzeichnet, daß** der Deckel (6) bzw. die Deckel (26, 27) in zumindest eine Lüftungsstellung absenkbar ist bzw. sind.

8. Fahrzeugdach nach einem der Ansprüche 1 bis 7,
**dadurch gekennzeichnet, daß** die Lagereinrichtung den Deckel (6) im Bereich seines Vorderrandes (11) und im Bereich seines Hinterrandes (12) lagert.

9. Fahrzeugdach nach einem der Ansprüche 1 bis 8,
**dadurch gekennzeichnet, daß** der Deckel (6) zum Einstellen von Lüftungsstellungen von der Lagereinrichtung an seinem Vorderrand (11), an seinem Hinterrand (12) oder an seinem Vorderrand (11) und an seinem Hinterrand (12) absenkbar ist.

10. Fahrzeugdach nach einem der Ansprüche 1 bis 9,
**dadurch gekennzeichnet, daß** eine in Querrichtung bewegbare Sonnenschutzeinrichtung (22, 23) zum zumindest teilweisen Abdecken der Dachöffnung (5) vorgesehen ist.

11. Fahrzeugdach nach Anspruch 10,
**dadurch gekennzeichnet, daß** die Sonnenschutzeinrichtung zumindest ein flächiges verschiebbares Sonnenschutzteil (22, 23) enthält, das an der Lagereinrichtung verschiebbar gelagert ist.

12. Fahrzeugdach nach Anspruch 11,
**dadurch gekennzeichnet, daß** das flächige Sonnenschutzteil (22, 23) lichtundurchlässig oder üchtteildurchlässig ist.

13. Fahrzeugdach nach Anspruch 12,
**dadurch gekennzeichnet, daß** das lichtteildurchlässige Sonnenschutzteil (23) eine Netzstruktur aufweist.

14. Fahrzeugdach nach Anspruch 12 oder 13,
**dadurch gekennzeichnet, daß** das lichtundurchlässiges Sonnenschutzteil (22) und das lichtteildurchlässige Sonnenschutzteil (23) von der Lagereinrichtung rechts bzw. links der Dachöffnung (5) in Außergebrauchstellung gelagert sind.

15. Fahrzeugdach nach einem der Ansprüche 1 bis 14,
**dadurch gekennzeichnet, daß** der Deckel (6) einen zumindest teilweise umlaufenden Rahmen (8) mit einer Wasserrinne (9) aufweist, der an Führungsschienen (14, 15) der Lagereinrichtung bewegbar gelagert ist.

16. Fahrzeugdach nach einem der Ansprüche 10 bis 15,
**dadurch gekennzeichnet, daß** die Lagereinrichtung mit dem Deckel (6) bzw. den Deckeln (26, 27) und der Sonnenschutzeinrichtung (22, 23) eine vormontierte Baueinheit (7) bildet.

17. Fahrzeugdach nach einem der Ansprüche 1 bis 16,
**dadurch gekennzeichnet, daß** der vordere Deckel (26) und der hintere Deckel (27) als Einheit oder getrennt bewegbar sind.

18. Fahrzeugdach nach einem der Ansprüche 1 bis 17,
**dadurch gekennzeichnet, daß** das Fahrzeugdach (2) vor oder hinter dem den Deckel (6) bzw. die Deckel (26, 27) aufweisenden Dachabschnitt einen zusätzlichen Dachabschnitt mit einem öffnungsfähigen Dachteil aufweist.

## Claims

1. Vehicle roof having a roof opening (5) and a panel arrangement having a movable transparent panel (6) for optionally closing or at least partly exposing the roof opening (5) extending centrally in the longitudinal direction on the vehicle roof (2) between two lateral opaque edge sections (32, 33) of the vehicle roof (2), the panel (6) being supported by means of a supporting device in such a way that it can be moved into a ventilation position,
**characterized in that** the respective lateral edge section (32, 33) of the vehicle roof (2) is at least as wide as the roof opening (5).

2. Vehicle roof according to Claim 1, **characterized in that** the panel arrangement has at least two panels and in particular a front panel (26) and a rear panel (27).

3. Vehicle roof according to Claim 1 or 2, **characterized in that** the at least one panel (6; 26, 27) can be displaced at least into a partial opening position.

4. Vehicle roof according to one of Claims 1 to 3, **characterized in that** the panel (6) or the panels (26, 27) can be displaced out of the roof opening (5) in the transverse direction with respect to the vehicle roof (2), under one of the two opaque edge sections (32, 33) of the vehicle roof (2).

5. Vehicle roof according to Claim 2 or 3, **characterized in that** one of the two panels (26 or 27) can be displaced under the other panel, or **in that** each panel (26, 27) can be displaced under the respective other panel.

6. Vehicle roof according to one of Claims 1 to 5, **characterized in that** the length of the roof opening (5) is at least twice and in particular three to four times its width.

7. Vehicle roof according to one of Claims 1 to 6, **characterized in that** the panel (6) or panels (26, 27) can be lowered into at least one ventilation position.

8. Vehicle roof according to one of Claims 1 to 7, **characterized in that** the supporting device supports the panel (6) in the region of its front edge (11) and in the region of its rear edge (12).

9. Vehicle roof according to one of Claims 1 to 8, **characterized in that**, in order to set ventilation positions, the panel (6) can be lowered by the supporting device at its front edge (11), at its rear edge (12) or at its front edge (11) and at its rear edge (12).

10. Vehicle roof according to one of Claims 1 to 9, **characterized in that** a sunshade device (22, 23) that can be moved in the transverse direction is provided in order at least partly to cover the roof opening (5).

11. Vehicle roof according to Claim 10, **characterized in that** the sunshade device contains at least one flat displaceable sunshade part (22, 23) which is displaceably mounted on the supporting device

12. Vehicle roof according to Claim 11, **characterized in that** the flat sunshade part (22, 23) is opaque or partly translucent.

13. Vehicle roof according to Claim 12, **characterized in that** the partly translucent sunshade part (23) has a network structure.

14. Vehicle roof according to Claim 12 or 13, **characterized in that** the opaque sunshade part (22) and the partly translucent sunshade part (23) are mounted on the right and on the left of the roof opening (5) by the support device when in the out of use position.

15. Vehicle roof according to one of Claims 1 to 14, **characterized in that** the panel (6) has an at least partly peripheral frame (8) having a water channel (9), which is mounted on guide rails (14, 15) of the supporting device such that it can move.

16. Vehicle roof according to one of Claims 10 to 15, **characterized in that** the supporting device, together with the panel (6) or the panels (26, 27) and the sunshade device (22, 23), forms a preassembled structural unit (7).

17. Vehicle roof according to one of Claims 1 to 16, **characterized in that** the front panel (26) and the rear panel (27) can be moved as a unit or separately.

18. Vehicle roof according to one of Claims 1 to 17, **characterized in that**, in front of or behind the roof section having the panel (6) or the panels (26, 27), the vehicle roof (2) has an additional roof section with a roof part that can be opened

## Revendications

1. Toit de véhicule comprenant une ouverture (5) et un ensemble de recouvrement muni d'un capot mobile transparent (6), en vue de l'obturation sélective ou du dégagement au moins partiel de ladite ouverture (5) s'étendant centralement dans la direction longitudinale, sur ledit toit (2) du véhicule, entre deux régions marginales latérales opaques (32, 33) dudit toit (2),
ledit capot (6) étant monté, au moyen d'un système de montage, de manière à pouvoir être déplacé jusqu'à une position de ventilation,
**caractérisé par le fait**
**que** la région marginale latérale considérée (32, 33) du toit (2) du véhicule présente au moins la largeur de l'ouverture (5) dudit toit.

2. Toit de véhicule, selon la revendication 1,
**caractérisé par le fait que** l'ensemble de recouvrement englobe au moins deux capots, et notamment un capot antérieur (26) et un capot postérieur (27).

3. Toit de véhicule, selon la revendication 1 ou 2,
**caractérisé par le fait que** le capot (6 ; 26, 27), prévu au minimum, peut être déplacé au moins jusqu'à une position d'ouverture partielle.

4. Toit de véhicule, selon l'une des revendications 1 à 3,
**caractérisé par le fait que** le capot (6) ou les capots (26, 27) peu(ven)t, respectivement, être déplacé(s) dans le sens transversal à partir de l'ouverture (5) du toit, vis-à-vis dudit toit (2) du véhicule, au-dessous de l'une des deux régions marginales opaques (32, 33) dudit toit (2).

5. Toit de véhicule, selon la revendication 2 ou 3,
**caractérisé par le fait que** l'un des deux capots (26 ou 27) peut être déplacé au-dessous de l'autre capot ; ou **par le fait que** chaque capot (26, 27) peut être déplacé au-dessous de l'autre capot respectif.

6. Toit de véhicule, selon l'une des revendications 1 à 5,
**caractérisé par le fait que** la longueur de l'ouverture (5) dudit toit représente le double et, en particulier, du triple au quadruple de sa largeur.

7. Toit de véhicule, selon l'une des revendications 1 à 6,
**caractérisé par le fait que** le capot (6) ou les capots (26, 27) peu(ven)t, respectivement, être abaissé(s) au moins jusqu'à une position de ventilation.

8. Toit de véhicule, selon l'une des revendications 1 à 7,
**caractérisé par le fait que** le système de montage assure le montage du capot (6) dans la région de son bord antérieur (11) et dans la région de son bord postérieur (12).

9. Toit de véhicule, selon l'une des revendications 1 à 8,
**caractérisé par le fait que** le capot (6) peut être abaissé par le système de montage sur son bord antérieur (11), sur son bord postérieur (12), ou sur son bord antérieur (11) et son bord postérieur (12), en vue du réglage de positions de ventilation.

10. Toit de véhicule, selon l'une des revendications 1 à 9,
**caractérisé par** la présence d'un dispositif (22, 23) de protection solaire, mobile dans le sens transversal, afin d'occulter au moins partiellement l'ouverture (5) dudit toit.

11. Toit de véhicule, selon la revendication 10,
**caractérisé par le fait que** le dispositif de protection solaire englobe au moins une partie de protection solaire (22, 23) aplatie et coulissante, montée à coulissement sur le système de montage.

12. Toit de véhicule, selon la revendication 11,
**caractérisé par le fait que** la partie aplatie de protection solaire (22, 23) est opaque ou partiellement transparente.

13. Toit de véhicule, selon la revendication 12,
**caractérisé par le fait que** la partie de protection solaire (23), partiellement transparente, possède une structure réticulaire.

14. Toit de véhicule, selon la revendication 12 ou 13,
**caractérisé par le fait que** la partie de protection solaire (22) opaque, et la partie de protection solaire (23) partiellement transparente, sont respectivement montées à droite et à gauche de l'ouverture (5) dudit toit, par le système de montage, en position de non-utilisation.

15. Toit de véhicule, selon l'une des revendications 1 à 14,
**caractérisé par le fait que** le capot (6) comporte un cadre (8) au moins partiellement périphérique, muni d'une gouttière (9) et monté mobile sur des glissières de guidage (14, 15) du système de montage.

16. Toit de véhicule, selon l'une des revendications 10 à 15,
**caractérisé par le fait que** le système de montage forme, respectivement, un ensemble unitaire préassemblé (7) avec le dispositif (22, 23) de protection solaire, et avec le capot (6) ou les capots (26, 27).

17. Toit de véhicule, selon l'une des revendications 1 à 16,
**caractérisé par le fait que** le capot antérieur (26) et le capot postérieur (27) sont mobiles séparément, ou comme un ensemble unitaire.

18. Toit de véhicule, selon l'une des revendications 1 à 17,
**caractérisé par le fait que** ledit toit (2) présente, devant ou derrière la région respectivement munie du capot (6) ou des capots (26, 27), une région additionnelle dotée d'une partie de pavillon apte à l'ouverture.
